# EUROPÄISCHE PATENTSCHRIFT

(11) **EP 2 667 475 B1**
(45) Veröffentlichungstag und Bekanntmachung des Hinweises auf die Patenterteilung: **24.07.2019**
(21) Anmeldenummer: 13166367.6
(22) Anmeldetag: 03.05.2013
(51) Int. Cl.: H02J 3/32, G01D 4/00, H04L 29/06

(54) **Vorrichtung und Verfahren zum Ändern eines Stromverbrauchsprofils von mindestens einer Person in einem Haus oder in einer Wohneinheit mit einem Verteilnetz**
Device and method for changing a power consumption profile of at least one person in a house or in a dwelling unit with a distribution network
Dispositif et procédé de modification d'un profil de consommation électrique d'au moins une personne dans une maison ou dans une unité d'habitation dotée d'un réseau de distribution

(30) Priorität: 21.05.2012 DE 102012208415
(43) Veröffentlichungstag der Anmeldung: 27.11.2013
(73) Patentinhaber: ROBERT BOSCH GMBH, 70442 Stuttgart (DE)
(72) Erfinder: May, Johanna, 71634 Ludwigsburg (DE)

(56) Entgegenhaltungen:
- EP-A1- 2 264 680
- GB-A- 2 479 908
- US-A1- 2011 133 655

## Beschreibung

Die vorliegende Erfindung betrifft eine Vorrichtung und ein Verfahren zum Ändern eines Stromverbrauchsprofils von mindestens einer Person in einem Haus oder in einer Wohneinheit mit einem Verteilnetz.

### Stand der Technik

Die DE 20 2011 004 327 U1 beschreibt ein Kommunikationsmodul zum Auslesen von Zählwerten aus elektronischen Zählern, welches entweder auf dem Zähler oder extern montiert wird, dadurch gekennzeichnet, dass dieses Kommunikationsmodul die Funktionen Datenabfrage, -sammlung und -übertragung erfüllt, wobei letztere nicht von außen initiiert werden muss, aber von extern dynamisch gesteuert werden kann, und darüber hinaus über einen Chip verfügt, über den die Zählwerte ohne äußere Initiierung übertragen werden.

Das dort beschriebene Modul verfügt über mindestens einen Mikroprozessor und mindestens eine Speichereinheit und eine Energieversorgung, die später einfach angeschlossen werden können und die Funktionalität des Zählers erweitern.

Die DE 10 2010 027 171 A1 beschreibt ein Verfahren zum Darstellen von Informationen über den Energieverbrauch eines Nutzers im Hinblick auf eine flexible, kostengünstige und mit geringem Aufwand realisierbare Darstellbarkeit der Informationen.

Das dort beschriebene Verfahren umfasst die Schritte: Auslesen eines elektronischen Stromzählers bei dem Nutzer zum Ermitteln von Daten über den Energieverbrauch, Übermitteln der Daten an einen Server empfangenen Daten auf einem mit der Einheit verbundenen Fernsehgerät.

Heutzutage sind die meisten Haushalte in vielen Ländern mit sogenannten konventionellen Haushaltszählern ausgestattet, die über keinerlei Kommunikationsschnittstelle zum Energieversorger verfügen. Dies soll sich bereits in naher Zukunft in der Europäischen Gemeinschaft und in anderen Gebieten der Welt ändern: Sogenannte intelligente Zähler, auch Smart Meter genannt, sollen eingeführt werden. Intelligente Zähler sind Zähler für Energie, zum Beispiel Strom oder Gas, der dem jeweiligen Anschlussnutzer den tatsächlichen Energieverbrauch und die tatsächliche Nutzungszeit anzeigt. Darüber hinaus werden Zähler auch als smart Meter oder intelligente Zähler bezeichnet, wenn sie mindestens von einem Mikroprozessor gesteuert werden.

Der Zweck intelligenter Zähler ist allen Endkunden in den Bereichen Strom, Erdgas, Fernheizung und Warmwasser eine Anzeigemöglichkeit, zu wettbewerbsorientierten Preisen, bereitzustellen, die den tatsächlichen Energieverbrauch des Endkunden und die tatsächliche Nutzungszeit in Privathaushalten widerspiegelt. Sogenannte Smart Meter, die über eine Kommunikationsschnittstelle die Verbrauchsdaten des Haushalts in "Echtzeit", d.h. etwa stündlich, übertragen, geben den Energieversorgern und Netzbetreiber die Möglichkeit, bedarfsgesteuert Regelung im Netz vorzunehmen, zum Beispiel durch Signale abschaltbare Verbraucher zu- oder abzuschalten, um Kraftwerken mehr bzw. weniger Leistung abzuverlangen.

Man-in-the-middle-Angriffe, auch Mittelsmannangriffe oder Janusangriffe oder eine sonstige Angriffsform auf Rechnernetze, die Verbraucherinformation und insbesondere Stromverbrauchsinformationen verarbeiten, würden dem Angreifer die Möglichkeit bieten, Rückschlüsse über die Anwesenheit des Stromkunden in seiner Wohnung ermöglichen.

Somit stellt das Smart Metering auch ein Sicherheitsrisiko bezüglich des Datenschutzes für die Haushalte dar. Zum einen besteht die Gefahr, dass diese Daten in falsche Hände gelangen, so dass beispielsweise Diebstahlbanden sehen können, wo sich aufgrund der Abwesenheit der Bewohner eines Hauses der Diebstahl besonders lohnt, wie etwa zu Urlaubszeiten in Wohngebieten und dies, ohne das Objekt direkt zu observieren. Zum anderen ist es möglich, durch Analyse von fein aufgelösten Strombezugsprofilen festzustellen, welchen Aktivitäten ein Verbraucher gerade nachgegangen ist oder nachgeht, so kann etwa anhand der Hell/Dunkel Intensität der unterschiedlichen Fernsehprogramme am Stromverbrauchsprofil festgestellt werden, welches Fernsehprogramm aktuell im Fernsehgerät gewählt ist.

In der GB 2479908 A sind ein System und ein Verfahren zum Beeinflussen von Stromzählerdaten zur Wahrung der Privatsphäre beschrieben. Wird ein Stromverbrauchsereignis festgestellt, beispielsweise wenn ein Verbraucher in dem System beginnt, Strom zu verbrauchen, kann zumindest ein Teil des verbrauchten Stroms, statt von einem Netzanschluss, von einer zusätzlichen Energiequelle des Systems, etwa einer Batterie, bereitgestellt werden. Dabei können für bestimmte Verbraucher charakteristische Verbrauchsprofile abgeändert oder vorgetäuscht werden.

Die Erfindung schafft eine Vorrichtung zum Simulieren einer Anwesenheit mindestens einer Person in einem Haus oder in einer Wohneinheit mit einem Verteilnetz mit den Merkmalen des Patentanspruchs 1 und ein Verfahren zum Simulieren einer Anwesenheit mindestens einer Person in einem Haus oder in einer Wohneinheit mit den Merkmalen des Patentanspruchs 9.

Demgemäß schafft die vorliegende Erfindung eine Vorrichtung zum Ändern eines Stromverbrauchsprofils eines Verteilnetzes in einem Haus oder in einer Wohneinheit mit den Merkmalen des Patentanspruchs 1.

Ferner ist erfindungsgemäß ein Verfahren mit den Merkmalen des Patentanspruchs 9 offenbart.

### Vorteile der Erfindung

Eine Idee der vorliegenden Erfindung ist es daher, dass ein mit einem Verteilnetz gekoppeltes Hausbatteriesystem in Form eines elektrischen Energiespeichers dazu genutzt wird, das Strombedarfsprofil zu verändern oder zu verfälschen. Im einfachsten Fall handelt es sich um eine Batterie, die mittels eines Wechselrichters und über eine Steuereinrichtung an das Verteilnetz angeschlossen wird.

Zudem ist eine Nutzerschnittstelle, wie etwa ein Display oder ein Computerbildschirm an einem Systemserver nötig, in der der Nutzer eingeben kann, wann das System aktiv sein soll.

Als ausgeschaltetes Sicherheits-System kann das Batteriesystem der Vorrichtung nur für seine ursprünglich vorgesehenen Aufgaben genutzt werden, als Backup-System bei Stromausfall oder zur Optimierung des Selbstverbrauchs von eigenerzeugtem Strom aus Photovoltaik, Kraft-Wärmekopplung oder Kleinwindanlagen oder Kleinwasserkraftanlagen oder lokalen Biomasse-Stromerzeugungs-Anlagen.

Zur Diebstahl-Vorbeugung lädt die Vorrichtung bei Abwesenheit der Bewohner die mit der Vorrichtung gekoppelte Batterie von Zeit zu Zeit oder entlädt sie, um eine Anwesenheit am intelligenten Zähler zu simulieren. Es ist nützlich, wenn das System Zugang zu mit dem Verteilnetz gekoppelten Verbrauchern hat, wie etwa Raumlicht, Außenlicht, Stereoanlage, Fernseher, Klimaanlage oder sonstige Verbraucher, die es erlauben, die Batterie der Vorrichtung stärker zu entladen und zudem die Anwesenheit durch weitere Signale (Licht, Geräusche) zu simulieren. Zudem kann die Batterie auch ins Verteilnetz und/oder ins Stromnetz entladen werden bzw. aus dem Verteilnetz geladen werden.

Hinzu ist eine Steuerungseinrichtung derart ausgelegt, dass die Steuerungseinrichtung zufallsgesteuert die Batterie über das Verteilnetz und/oder das Stromnetz lädt und/oder entlädt. Zusätzlich ist die Steuerungseinrichtung insbesondere derart ausgelegt, dass die Steuerungseinrichtung mit dem Verteilnetz gekoppelte Verbraucher zufallsgesteuert einschaltet oder ausschaltet.

Gemäß einer weiteren vorteilhaften Ausführungsform der Erfindung ist vorgesehen, die Steuerungseinrichtung der Vorrichtung ferner mit einer Schnittstelleneinrichtung gekoppelt ist und die Steuerungseinrichtung dazu ausgelegt ist, das mindestens eine einstellbare Kriterium durch über die Schnittstelleneinrichtung getätigte Eingaben von einem Nutzer einzustellen. Dies ermöglicht vorteilhaft, dem Nutzer ein interaktives Feedback über den Betriebszustand zu vermitteln. Das mindestens eine Kriterium ist beispielsweise ein Parameter der Zufallssteuerung und/oder eine minimale Einschaltdauer eines Verbrauchers und/oder ein Verbraucher.

Gemäß einer vorteilhaften Ausführungsform der Erfindung ist vorgesehen, dass die Steuerungseinrichtung ferner dazu ausgelegt ist, dem Nutzer Daten zu einem Betriebszustand der Vorrichtung und/oder Daten zu dem derzeitigen elektrischen Energiefluss über die mit der Steuerungseinrichtung gekoppelte Schnittstelleneinrichtung anzuzeigen.

Gemäß einer weiteren vorteilhaften Ausführungsform der ist vorgesehen, dass die Steuerungseinrichtung der Vorrichtung ferner mit einer Sensoreinrichtung gekoppelt ist und die Steuerungseinrichtung dazu ausgelegt ist, die Anwesenheit der Person basierend auf von der Sensoreinrichtung erfassten Daten zu ermitteln. Dies ermöglicht, die Vorrichtung in effektiver Weise nur dann zu aktivieren, wenn sich im Haus keine Person aufhält.

Gemäß einer weiteren vorteilhaften Ausführungsform der Erfindung ist vorgesehen, dass die Vorrichtung ferner mit weiteren Verbrauchern des Verteilnetzes gekoppelt ist, um die elektrische Energiespeichereinrichtung zu entladen. Dadurch wird ein effizienter und energiesparsamer Betrieb der Vorrichtung erreicht.

Gemäß einer weiteren vorteilhaften Ausführungsform der Erfindung ist vorgesehen, dass die Leistungsschaltereinrichtung ferner dazu ausgelegt ist, einen elektrischen Energiefluss von der elektrischen Energiespeichereinrichtung in das Verteilnetz zu ermöglichen. Dies ermöglicht eine kostengünstige Betriebsweise der Vorrichtung.

Gemäß einer weiteren vorteilhaften Ausführungsform der Erfindung ist vorgesehen, dass die Vorrichtung zum Anschluss an einen dreiphasigen Hausanschluss geeignet ist. Dadurch kann die Vorrichtung auch im Bereich der elektrischen Energietechnik für Anwendungen mit hohem Energiebedarf eingesetzt werden. Es ist denkbar, die Vorrichtung so anzubringen, dass sie zwischen den Phasen hin- und herschalten kann, um die Anwesenheit quasi für jede stromführende Phase zu simulieren.

Gemäß einer weiteren vorteilhaften Ausführungsform der Erfindung ist vorgesehen, dass die elektrische Energiespeichereinrichtung als ein dreiphasiges Batteriesystem ausgebildet ist. Dies ermöglicht vorteilhaft, die Anwesenheit der Person für jede stromführende Phase simulieren zu können.

Gemäß einer weiteren vorteilhaften Ausführungsform der Erfindung ist vorgesehen, dass als die elektrische Energiespeichereinrichtung eine elektrische Energiespeichereinrichtung einer Photovoltaikanlage, einer unterbrechungsfreien Stromversorgung oder einer sonstigen elektrischen Anlage verwendet wird.

Gemäß einer weiteren vorteilhaften Ausführungsform der Erfindung ist vorgesehen, dass durch das Ändern des Stromverbrauchsprofils des Verteilnetzes ein Simulieren einer Anwesenheit der mindestens einen Person durchführbar ist.

Gemäß einer weiteren vorteilhaften Ausführungsform der Erfindung ist vorgesehen, dass das Ändern des Stromverbrauchsprofils des Verteilnetzes zum Simulieren einer Anwesenheit der mindestens einen Person vorgenommen wird.

Die obigen Ausgestaltungen und Weiterbildungen lassen sich, sofern sinnvoll, beliebig miteinander kombinieren.

Kurze Beschreibung der Zeichnungen

Weitere Merkmale und Vorteile der vorliegenden Erfindung werden nachfolgend anhand der Figuren erläutert.

Es zeigen:
- Fig. 1: eine schematische Darstellung eines Flussdiagramms eines Verfahrens zum Ändern eines Stromverbrauchsprofils von mindestens einer Person in einem Haus oder in einer Wohneinheit mit einem Verteilnetz mit einem Verteilnetz gemäß einer ersten Ausführungsform der vorliegenden Erfindung;
- Fig. 2: eine schematische Darstellung eines Zeitdiagramms eines Stromverbrauchsprofils gemäß einer ersten Ausführungsform der vorliegenden Erfindung; und
- Fig. 3: eine schematische Darstellung einer Vorrichtung zum Ändern eines Stromverbrauchsprofils von mindestens einer Person in einem Haus oder in einer Wohneinheit mit einem Verteilnetz gemäß einer zweiten Ausführungsform der vorliegenden Erfindung.

In allen Figuren sind gleiche bzw. funktionsgleiche Elemente und Vorrichtungen - sofern nichts anderes angegeben ist - mit denselben Bezugszeichen versehen worden.

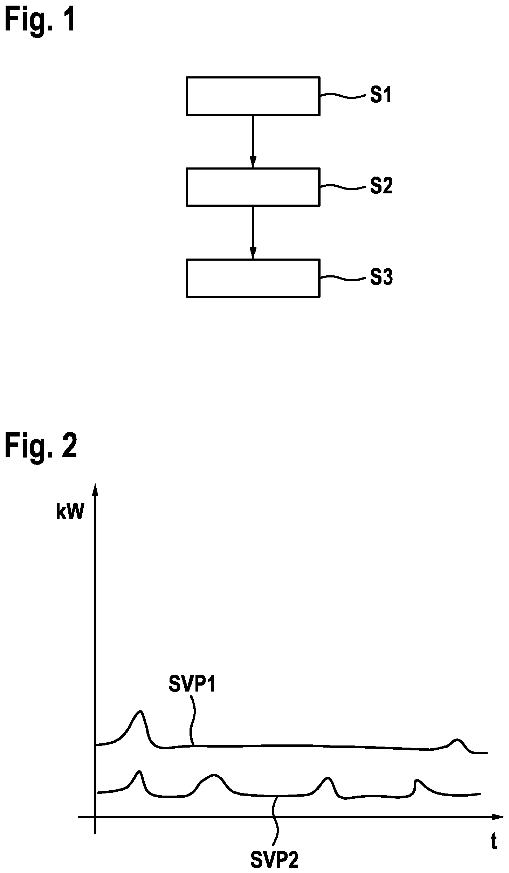

Die Figur 1 zeigt eine schematische Darstellung eines Flussdiagramms eines Verfahrens zum Ändern eines Stromverbrauchsprofils von mindestens einer Person in einem Haus oder in einer Wohneinheit mit einem Verteilnetz gemäß einer ersten Ausführungsform der vorliegenden Erfindung.

Es ist zu beachten, dass für dreiphasig angeschlossene Haushalte, welche meist auch drei Stromzähler aufweisen, ein dreiphasig ansteuerbares Batteriesystem nötig ist, um die Anwesenheit der Person für jede stromführende Phase simulieren zu können. Dies kann gegebenenfalls durch eine Batterie mit geeigneter Leistungselektronik mit drei Ausgängen realisiert werden, die zusätzlich an geeignete Verbraucher angeschlossen wird.

Alternativ zur Nutzung eines Hausbatteriesystems ist es auch möglich, ein anwesendes Elektrofahrzeug oder ein sonstiges als plug-in-hybrid-elektrisches Fahrzeug ausgebildetes Kraftfahrzeug bzw. dessen Batterie zur Simulation von Lastprofilen zu verwenden.

Die automatische Ansteuerung von Verbrauchern kann, wenn im System vorhanden, auch für weitere Zwecke des Komforts genutzt werden, beispielsweise zur regelmäßigen oder in gewissen Zeiträumen zufallsorientierten An- und Abschaltung von Aquarien- und Terrarienbeleuchtungen, zur automatischen Bewässerung des Gartens oder der Zimmerpflanzen, zum Starten und/oder Stoppen von Reinigungsrobotern oder autonomen Rasenmähern oder sonstige Energieverbraucher.

Das Verfahren zum Simulieren einer Anwesenheit einer Person in einem Haus oder in einer Wohneinheit wird durch die Vorrichtung 100 durchgeführt.

In einem ersten Verfahrensschritt erfolgt ein Bereitstellen S1 von mindestens einem einstellbaren Kriterium zum Ändern des Stromverbrauchsprofils SVP1, SVP2 des Verteilnetzes 40 durch eine Steuerungseinrichtung 50 und ein Bereitstellen einer elektrischen Energiespeichereinrichtung 45.

In einem zweiten Verfahrensschritt erfolgt ein Steuern S2 eines elektrischen Energieflusses anhand des mindestens einen einstellbaren Kriteriums durch ein Ansteuern einer Leistungsschaltereinrichtung 55 durch die Steuerungseinrichtung 50, um den elektrischen Energiefluss zwischen der elektrischen Energiespeichereinrichtung 45 und dem Verteilnetz 40 ein- und auszuschalten.

Dabei kann der elektrische Energiefluss auch durch unterschiedliche Leistungen einstellbar sein und nicht nur durch ein grobes ein- und ausschalten der Verbraucher gesteuert werden. In einem dritten Verfahrensschritt erfolgt ein Ändern S3 des Stromverbrauchsprofils SVP1, SVP2 des Verteilnetzes 40 zum Simulieren der Anwesenheit der Person.

Die Figur 2 zeigt eine schematische Darstellung eines Zeitdiagramms eines Stromverbrauchsprofils gemäß einer ersten Ausführungsform der vorliegenden Erfindung. Die Ordinatenachse des in Figur 2 dargestellten Zeitdiagramms stellt den elektrischen Leistungsverbrauch in der Einheit kW dar, auf der Abszissenachse ist die Zeit t aufgetragen.

Ein Stromverbrauchsprofil SVP1 ist in dem in der Figur 2 gezeigten Diagramm dargestellt und gibt den zeitlichen Verlauf des Strom- bzw. Energieverbrauchs eines Verteilnetzes 40 in Abwesenheit der Person wieder. Das Stromverbrauchsprofil SVP1 zeigt abgesehen von kleinen Ausschlägen zu Beginn und am Ende des dargestellten Zeitintervalls ein konstantes Profil, aus dem sich die Anwesenheit des Verbrauchers schließen lässt, wobei der sog. Standby-Verbrauch (Kühlschrank, Standby-Funktionen von Stereoanlage, etc.) in der Figur 2 als durchgezogene Linie dargestellt ist, - in Realität ergibt sich durch die Standby-Verbraucher eine Art "Grundrauschen" mit charakteristischen Peaks.

Abweichend hiervon kann bei einem Stromverbrauchsprofil SVP2 durch zwischenzeitliches automatisches Einschalten eines Verbrauchers, ein Stromverbrauch erzeugt werden, welcher eine Abwesenheit mindestens einer Person simuliert.

Die Stromverbrauchsprofile SVP1, SVP2 werden beispielsweise durch einen im Hausanschluss 35 integrierten Stromzähler erfasst.

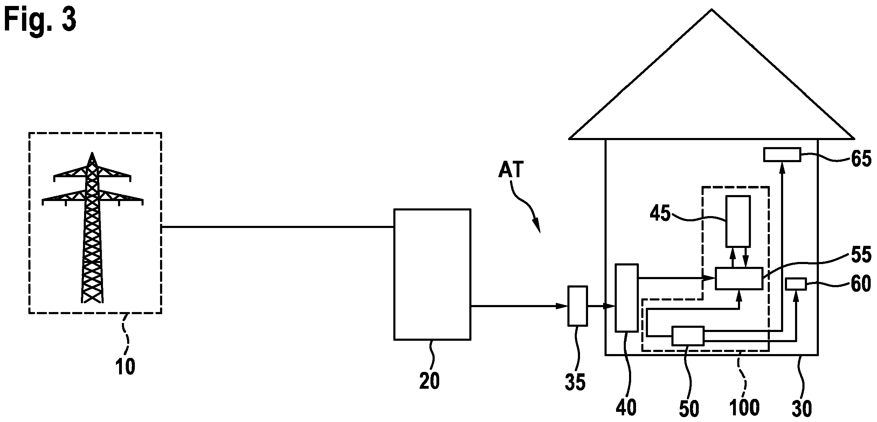

Die Figur 3 zeigt eine schematische Darstellung einer Vorrichtung zum Ändern eines Stromverbrauchsprofils von mindestens einer Person in einem Haus oder in einer Wohneinheit mit einem Verteilnetz gemäß einer zweiten Ausführungsform der vorliegenden Erfindung.

Ein überregionales Stromnetz 10 ist beispielsweise mit einer Transformatorenstation 20 gekoppelt. Die Verbindung zwischen der Transformatorenstation 20 und einem Hausanschluss 35 wird oft als letzte Meile bezeichnet. Auf die letzte Meile kann nun beispielsweise ein Man-in-the-middle-Angriff AT erfolgen, mit dem Ziel, die Anwesenheit der Hausbewohner in Erfahrung zu bringen.

Das Verteilnetz 40 ist beispielsweise als ein Niederspannungsnetz ausgebildet und versorgt den jeweiligen privaten Haushalt.

Das überregionale Stromnetz 10 ist beispielsweise als ein Mittelspannungsnetz und/oder als ein Übertragungsnetz ausgebildet.

Der Hausanschluss 35 ist beispielsweise mit dem Verteilnetz 40 eines Hauses 30 verbunden.

Die Vorrichtung 100 umfasst eine elektrische Energiespeichereinrichtung 45, eine Leistungsschaltereinrichtung 55 und eine Steuerungseinrichtung 50.

Die elektrische Energiespeichereinrichtung 45 ist dazu ausgelegt, elektrische Energie zu speichern. Die elektrische Energiespeichereinrichtung 45 ist beispielsweise als Akkumulator, als Kondensator oder als ein supraleitender magnetischer Energiespeicher oder als ein Schwungradspeicher ausgebildet.

Die Leistungsschaltereinrichtung 55 ist beispielsweise mit der elektrischen Energiespeichereinrichtung 45 und dem Verteilnetz 40 gekoppelt und dazu ausgelegt, einen elektrischen Energiefluss zwischen der elektrischen Energiespeichereinrichtung 45 und dem Verteilnetz 60 ein- und auszuschalten.

Die Steuerungseinrichtung 50 ist beispielsweise dazu ausgelegt, den elektrischen Energiefluss anhand von mindestens einem einstellbaren Kriterium zu steuern und dadurch die Anwesenheit der Person durch das Ändern eines Stromverbrauchsprofils SVP1, SVP2 des Verteilnetzes 40 zu simulieren.

Die Steuerungseinrichtung 50 der Vorrichtung 100 kann ferner mit einer Sensoreinrichtung 65 gekoppelt sein und dazu ausgelegt sein, die Anwesenheit der Person basierend auf von der Sensoreinrichtung 65 erfassten Daten zu ermitteln.

Die Sensoreinrichtung 65 kann beispielsweise als ein Bewegungsmelder oder als ein elektronischer Sensor ausgebildet sein, der Bewegungen in seiner näheren Umgebung erkennt und dadurch als elektrischer Schalter arbeiten kann. Die Sensoreinrichtung 65 kann zum Detektieren der Anwesenheit einer Person eingesetzt werden. Die Sensoreinrichtung 65 kann entweder aktiv mit elektromagnetischen Wellen, mittels eines Dopplerradars, mit Ultraschall, mittels eines Ultraschall-Bewegungsmelders, oder passiv anhand der Infrarotstrahlung der Umgebung arbeiten.

Die Steuerungseinrichtung 50 der Vorrichtung 100 kann ferner mit einer Schnittstelleneinrichtung 60 gekoppelt sein und die Steuerungseinrichtung 50 kann dazu ausgelegt sein, die einstellbaren Kriterien durch über die Schnittstelleneinrichtung 60 getätigte Eingaben von einem Nutzer einzustellen. Die Schnittstelleneinrichtung 60 kann als ein Flüssigkristallbildschirm oder als eine Flüssigkristallanzeige mit Touchscreen oder als ein Hauscomputer ausgeführt sein.

Das mindestens eine einstellbare Kriterium ist beispielsweise als eine Steuerungsregel für die Steuerungseinrichtung 50 ausgeführt und umfasst Angaben zu einer maximalen Dauer eines konstanten Stromverbrauchs in den Stromverbrauchsprofilen SVP1, SVP2. Beispielsweise kann das als Steuerungsregel definierte Kriterium ferner Angaben zu Uhrzeiten und Wochentagen enthalten, an denen die Stromverbrauchsprofile SVP1, SVP2 bestimmte Charakteristiken aufweisen, wie etwa einen werktags erhöhten Stromverbrauch am Morgen. Das mindestens eine einstellbare Kriterium kann dabei in Abhängigkeit des Einsatzortes vom Hersteller vor dem Einsatz der Vorrichtung eingestellt werden und dann im Zustand der Werkseinstellungen weiter verwendet werden. Ferner kann das mindestens eine einstellbare Kriterium auch durch Nutzereingaben entsprechend angepasst werden. Zudem ist es möglich, per verschlüsselter Internet-Verbindung oder Software-Installation über einen Datenträger, wie etwa über einen USB-Stick, über einen optischen Datenträger oder über einen auf einem Halbleiterkristall mit mikroelektronischen Speicherstrukturen realisierten Flashdatenspeicher, ein Update der Steuerungsalgorithmen vorzunehmen.

## Patentansprüche

1. Vorrichtung (100) zum Ändern eines Stromverbrauchsprofils (SVP1, SVP2) eines Verteilnetzes (40) in einem Haus oder in einer Wohneinheit mindestens einer Person, wobei die Vorrichtung (100) aufweist:
- eine elektrische Energiespeichereinrichtung (45), welche dazu ausgelegt ist, elektrische Energie zu speichern;
- eine Leistungsschaltereinrichtung (55), welche mit der elektrischen Energiespeichereinrichtung (45) und dem Verteilnetz (40) gekoppelt ist und welche dazu ausgelegt ist, einen elektrischen Energiefluss zwischen der elektrischen Energiespeichereinrichtung (45) und dem Verteilnetz (40) ein- und auszuschalten; und
- eine Steuerungseinrichtung (50), welche dazu ausgelegt ist, den elektrischen Energiefluss anhand von mindestens einem einstellbaren Kriterium zu steuern und dadurch das Stromverbrauchsprofil (SVP1, SVP2) des Verteilnetzes (40) zu ändern;
**dadurch gekennzeichnet, dass** die Steuerungseinrichtung (50) weiterhin dazu ausgelegt ist, zufallsgesteuert die elektrische Energiespeichereinrichtung (45) über das Verteilnetz (40) zu laden und/oder zu entladen, die Steuerungseinrichtung (50) der Vorrichtung (100) ferner mit einer Sensoreinrichtung (65) gekoppelt ist und die Steuerungseinrichtung (50) dazu ausgelegt ist, eine Anwesenheit der Person basierend auf von der Sensoreinrichtung (65) erfassten Daten zu ermitteln und die Vorrichtung dazu ausgebildet ist, nur dann aktiviert zu werden, wenn sich, basierend auf den von der Sensoreinrichtung (65) ermittelten Daten, keine Person in dem Haus oder in der Wohneinheit aufhält.

2. Vorrichtung (100) nach Anspruch 1, wobei Steuerungseinrichtung (50) der Vorrichtung (100) ferner mit einer Schnittstelleneinrichtung (60) gekoppelt ist und die Steuerungseinrichtung (50) dazu ausgelegt ist, das mindestens eine einstellbare Kriterium durch über die Schnittstelleneinrichtung (60) getätigte Eingaben von einem Nutzer einzustellen.

3. Vorrichtung (100) nach Anspruch 2, wobei die Steuerungseinrichtung (50) ferner dazu ausgelegt ist, dem Nutzer über die Schnittstelleneinrichtung (60) Daten zu einem Betriebszustand der Vorrichtung (100) und/oder Daten zu dem derzeitigen elektrischen Energiefluss anzuzeigen.

4. Vorrichtung (100) nach einem der Ansprüche 1 bis 3, wobei die Vorrichtung ferner mit weiteren Verbrauchern des Verteilnetzes (40) gekoppelt ist, um die elektrische Energiespeichereinrichtung (45) zu entladen.

5. Vorrichtung (100) nach einem der Ansprüche 1 bis 4, wobei die Leistungsschaltereinrichtung (55) ferner dazu ausgelegt ist, einen elektrischen Energiefluss von der elektrischen Energiespeichereinrichtung (45) in das Verteilnetz (40) zu ermöglichen.

6. Vorrichtung (100) nach einem der Ansprüche 1 bis 5, wobei als die elektrische Energiespeichereinrichtung (45) eine elektrische Energiespeichereinrichtung einer Photovoltaikanlage, einer unterbrechungsfreien Stromversorgung oder einer sonstigen elektrischen Anlage verwendbar ist.

7. Vorrichtung (100) nach einem der Ansprüche 1 bis 6, wobei durch das Ändern des Stromverbrauchsprofils (SVP1, SVP2) des Verteilnetzes (40) ein Simulieren einer Anwesenheit der mindestens einen Person durchführbar ist.

8. Vorrichtung nach Anspruch 1, wobei die Steuerungseinrichtung (50) dazu ausgelegt ist, mit dem Verteilnetz (40) gekoppelte Verbraucher zufallsgesteuert ein- oder auszuschalten.

9. Verfahren zum Ändern eines Stromverbrauchsprofils (SVP1, SVP2) eines Verteilnetzes (40) in einem Haus oder in einer Wohneinheit mindestens einer Person, mit den Schritten:
- Bereitstellen (S1) von mindestens einem einstellbaren Kriterium zum Ändern des Stromverbrauchsprofils (SVP1, SVP2) des Verteilnetzes (40) durch eine Steuerungseinrichtung (50) und Bereitstellen einer elektrischen Energiespeichereinrichtung (45);
- Steuern (S2) eines elektrischen Energieflusses anhand des mindestens einem einstellbaren Kriterium durch ein Ansteuern einer Leistungsschaltereinrichtung (55) durch die Steuerungseinrichtung (50), um den elektrischen Energiefluss zwischen der elektrischen Energiespeichereinrichtung (45) und dem Verteilnetz (40) ein- und auszuschalten;
- Ändern (S3) des Stromverbrauchsprofils (SVP1, SVP2) des Verteilnetzes (40);
**dadurch gekennzeichnet, dass** das Laden und/oder Entladen der elektrischen Energiespeichervorrichtung (45) mittels der Steuerungseinrichtung (50) über das Verteilnetz (40) zufallsgesteuert erfolgt, eine Anwesenheit der Person basierend auf von einer mit der Steuerungseinrichtung (50) gekoppelten Sensoreinrichtung (65) erfassten Daten ermittelt wird und die Schritte des Verfahrens nur dann durchgeführt werden, wenn sich, basierend auf den von der Sensoreinrichtung (65) ermittelten Daten, keine Person in dem Haus oder in der Wohneinheit aufhält.

10. Verfahren nach Anspruch 9, wobei das Ändern (S3) des Stromverbrauchsprofils (SVP1, SVP2) des Verteilnetzes zum Simulieren einer Anwesenheit der mindestens einen Person vorgenommen wird.

## Claims

1. Apparatus (100) for changing an electricity consumption profile (SVP1, SVP2) of a distribution network (40) in a house or in a residential unit of at least one person, wherein the apparatus (100) has:
- an electrical energy storage device (45), which is designed to store electrical energy;
- a circuit breaker device (55), which is coupled to the electrical energy storage device (45) and the distribution network (40) and which is designed to switch on and off a flow of electrical energy between the electrical energy storage device (45) and the distribution network (40); and
- a control device (50), which is designed to control the flow of electrical energy based on at least one adjustable criterion and thereby to change the electricity consumption profile (SVP1, SVP2) of the distribution network (40);
**characterized in that** the control device (50) is furthermore designed to charge and/or to discharge the electrical energy storage device (45) by means of the distribution network (40) in a randomly controlled manner, the control device (50) of the apparatus (100) is also coupled to a sensor device (65) and the control device (50) is designed to identify a presence of the person based on data detected by the sensor device (65) and the apparatus is designed to be activated only when, based on the data identified by the sensor device (65), there is no person in the house or in the residential unit.

2. Apparatus (100) according to Claim 1, wherein the control device (50) of the apparatus (100) is also coupled to an interface device (60) and the control device (50) is designed to adjust the at least one adjustable criterion through inputs of a user that are executed by means of the interface device (60).

3. Apparatus (100) according to Claim 2, wherein the control device (50) is also designed to display data regarding an operating state of the apparatus (100) and/or data regarding the present flow of electrical energy to the user by means of the interface device (60).

4. Apparatus (100) according to one of Claims 1 to 3, wherein the apparatus is also coupled to further consumers of the distribution network (40) in order to discharge the electrical energy storage device (45).

5. Apparatus (100) according to one of Claims 1 to 4, wherein the circuit breaker device (55) is also designed to make it possible for electrical energy to flow from the electrical energy storage device (45) into the distribution network (40).

6. Apparatus (100) according to one of Claims 1 to 5, wherein an electrical energy storage device of a photovoltaic installation, of an uninterruptible electricity supply or of another electrical installation can be used as the electrical energy storage device (45).

7. Apparatus (100) according to one of Claims 1 to 6, wherein a presence of the at least one person can be simulated by changing the electricity consumption profile (SVP1, SVP2) of the distribution network (40).

8. Apparatus according to Claim 1, wherein the control device (50) is designed to switch on or off consumers coupled to the distribution network (40) in a randomly controlled manner.

9. Method for changing an electricity consumption profile (SVP1, SVP2) of a distribution network (40) in a house or in a residential unit of at least one person, comprising the following steps:
- providing (S1) at least one adjustable criterion for changing the electricity consumption profile (SVP1, SVP2) of the distribution network (40) by way of a control device (50) and providing an electrical energy storage device (45);
- controlling (S2) a flow of electrical energy based on the at least one adjustable criterion by actuating a circuit breaker device (55) by way of the control device (50) in order to switch on and off the flow of electrical energy between the electrical energy storage device (45) and the distribution network (40);
- changing (S3) the electricity consumption profile (SVP1, SVP2) of the distribution network (40);
**characterized in that** the charging and/or discharging of the electrical energy storage apparatus (45) by means of the control device (50) is effected by means of the distribution network (40) in a randomly controlled manner, a presence of the person is identified based on data detected by a sensor device (65) coupled to the control device (50) and the steps of the method are carried out only when, based on the data identified by the sensor device (65), there is no person in the house or in the residential unit.

10. Method according to Claim 9, wherein the changing (S3) of the electricity consumption profile (SVP1, SVP2) of the distribution network is performed to simulate a presence of the at least one person.

## Revendications

1. Arrangement (100) pour modifier un profil de consommation électrique (SVP1, SVP2) d'un réseau de distribution (40) dans une maison ou une unité d'habitation d'au moins une personne, l'arrangement (100) comprenant :
- un dispositif d'accumulation d'énergie électrique (45) qui est conçu pour accumuler de l'énergie électrique ;
- un dispositif commutateur de puissance (55) qui est connecté au dispositif d'accumulation d'énergie électrique (45) et au réseau de distribution (40) et qui est conçu pour mettre en circuit et hors circuit un flux d'énergie électrique entre le dispositif d'accumulation d'énergie électrique (45) et le réseau de distribution (40) ; et
- un dispositif de commande (50) qui est conçu pour commander le flux d'énergie électrique à l'aide d'au moins un critère réglable et modifier ainsi le profil de consommation électrique (SVP1, SVP2) du réseau de distribution (40) ;
**caractérisé en ce que** le dispositif de commande (50) est en outre conçu pour charger et/ou décharger le dispositif d'accumulation d'énergie électrique (45) par le biais du réseau de distribution (40) de manière aléatoire, le dispositif de commande (50) de l'arrangement (100) est en outre connecté à un dispositif de détection (65) et le dispositif de commande (50) est conçu pour déterminer la présence de la personne sur la base des données acquises par le dispositif de détection (65) et l'arrangement est conçu pour n'être activé que lorsque, sur la base des données déterminées par le dispositif de détection (65), aucune personne ne séjourne dans la maison ou dans l'unité d'habitation.

2. Arrangement (100) selon la revendication 1, le dispositif de commande (50) de l'arrangement (100) étant en outre connecté à un dispositif d'interface (60) et le dispositif de commande (50) étant conçu pour régler l'au moins un critère réglable par des saisies d'un utilisateur effectuées par le biais du dispositif d'interface (60).

3. Arrangement (100) selon la revendication 2, le dispositif de commande (50) étant en outre conçu pour afficher à l'utilisateur, par le biais du dispositif d'interface (60), des données à propos d'un état opérationnel de l'arrangement (100) et/ou des données à propos du flux d'énergie électrique actuel.

4. Arrangement (100) selon l'une des revendications 1 à 3, l'arrangement étant en outre connecté à des récepteurs supplémentaires du réseau de distribution (40) en vue de décharger le dispositif d'accumulation d'énergie électrique (45).

5. Arrangement (100) selon l'une des revendications 1 à 4, le dispositif commutateur de puissance (55) étant en outre conçu pour permettre un flux d'énergie électrique depuis le dispositif d'accumulation d'énergie électrique (45) dans le réseau de distribution (40).

6. Arrangement (100) selon l'une des revendications 1 à 5, un dispositif d'accumulation d'énergie électrique d'une installation photovoltaïque, d'une alimentation électrique ininterruptible ou d'un équipement électrique similaire pouvant être utilisé en tant que dispositif d'accumulation d'énergie électrique (45).

7. Arrangement (100) selon l'une des revendications 1 à 6, une simulation d'une présence de l'au moins une personne pouvant être effectuée par la modification du profil de consommation électrique (SVP1, SVP2) du réseau de distribution (40).

8. Arrangement selon la revendication 1, le dispositif de commande (50) étant conçu pour mettre en circuit ou hors circuit de manière aléatoire les récepteurs connectés au réseau de distribution (40).

9. Procédé pour modifier un profil de consommation électrique (SVP1, SVP2) d'un réseau de distribution (40) dans une maison ou une unité d'habitation d'au moins une personne, comprenant les étapes suivantes :
- fourniture (S1) d'au moins un critère réglable pour modifier le profil de consommation électrique (SVP1, SVP2) du réseau de distribution (40) par un dispositif de commande (50) et fourniture d'un dispositif d'accumulation d'énergie électrique (45) ;
- commande (S2) d'un flux d'énergie électrique à l'aide de l'au moins un critère réglable par une excitation d'un dispositif commutateur de puissance (55) par le dispositif de commande (50) afin de mettre en circuit et hors circuit le flux d'énergie électrique entre le dispositif d'accumulation d'énergie électrique (45) et le réseau de distribution (40) ;
- modification (S3) du profil de consommation électrique (SVP1, SVP2) du réseau de distribution (40) ;
**caractérisé en ce que** la charge et/ou la décharge du dispositif d'accumulation d'énergie électrique (45) par le biais du réseau de distribution (40) est effectuée de manière aléatoire par le dispositif de commande (50), une présence de la personne est déterminée sur la base de données acquises par un dispositif de détection (65) connecté au dispositif de commande (50) et les étapes du procédé ne sont exécutées que lorsque, sur la base des données déterminées par le dispositif de détection (65), aucune personne ne séjourne dans la maison ou dans l'unité d'habitation.

10. Procédé selon la revendication 9, la modification (S3) du profil de consommation électrique (SVP1, SVP2) du réseau de distribution étant effectuée pour simuler une présence de l'au moins une personne.
